# EUROPÄISCHE PATENTANMELDUNG

(11) **EP 4 380 312 A1**
(43) Veröffentlichungstag der Anmeldung: **05.06.2024**
(21) Anmeldenummer: 23212290.3
(22) Anmeldetag: 27.11.2023
(51) Int. Cl.: H05B 6/64, F24C 7/02, F24C 14/00, H05B 6/76

(54) **STEUERBOX FÜR EIN GARGERÄT UND GARGERÄT**

(30) Priorität: 30.11.2022 DE 102022131723
(71) Anmelder: Topinox Sarl, 68270 Wittenheim (FR)
(72) Erfinder: GRÜHBAUM, Klaus, 68270 Wittenheim (FR); STROBL, Christoph, 68270 Wittenheim (FR); PRINZING, Michael, 68270 Wittenheim (FR); ULMER, Manuel, 68270 Wittenheim (FR); REICHMANN, Sven Ole, 68270 Wittenheim (FR); SEITER, Bernhard, 68270 Wittenheim (FR)
(74) Vertreter: Prinz & Partner mbB

(57) **Zusammenfassung**

Es wird eine Steuerbox (14) für ein Gargerät (10) angegeben, mit einem Gehäuse (20), in dem mindestens ein Dampfeinlass (26), mindestens eine Wasserdüse (22), ein Dampfauslass (18) und mindestens ein Reinigungsmitteleinlass (30) vorhanden sind, wobei der Reinigungsmitteleinlass (30) bezogen auf einen Strömungsweg des Dampfes zwischen dem Dampfeinlass (26) und dem Dampfauslass (18) angeordnet ist. Des Weiteren wird ein Gargerät (10) mit einer Steuerbox (14) angegeben.

## Beschreibung

Die Erfindung betrifft eine Steuerbox für ein Gargerät, mit mindestens einem Dampfeinlass, mindestens einer Wasserdüse und mindestens einem Dampfauslass sowie ein Gargerät.

Eine Steuerbox dient dazu, Dampf abzuführen, der bei einem Garvorgang in einem Garraum entsteht, damit möglichst wenig Dampf an einem Entlüftungsrohr eines Gargeräts entweicht. Hierzu wird der Dampf innerhalb des Gargeräts zur Steuerbox geführt, in welcher der Dampf kondensieren soll. Zum Kondensieren größerer Dampfmengen wird in der Steuerbox Wasser über die Wasserdüse zugeführt. Das Kondensat kann dann über einen Wasserauslass zu einer Abwasserleitung geführt werden.

Über einen längeren Zeitraum betrachtet können sich in der Steuerbox Ablagerungen bilden, da aus dem Garraum auch fetthaltiger Wrasen in die Steuerbox strömt. Diese Ablagerungen können die Funktion der Steuerbox beeinträchtigen, weshalb eine regelmäßige Reinigung erforderlich ist.

Da die Steuerbox jedoch schwer zugänglich ist, ist eine regelmäßige Reinigung mit hohem Aufwand verbunden. Vor allem an der Decke der Steuerbox lassen sich Ablagerungen nur schwer entfernen.

Es ist daher eine Aufgabe der Erfindung, eine Steuerbox bereitzustellen, die einfach und effizient zu reinigen ist.

Diese Aufgabe wird erfindungsgemäß gelöst durch eine Steuerbox für ein Gargerät, mit einem Gehäuse, in dem mindestens ein Dampfeinlass, mindestens eine Wasserdüse, ein Dampfauslass und mindestens ein Reinigungsmitteleinlass vorhanden sind, wobei der Reinigungsmitteleinlass bezogen auf einen Strömungsweg des Dampfes zwischen dem Dampfeinlass und dem Dampfauslass angeordnet ist. Durch den Reinigungsmitteleinlass lässt sich besonders einfach Reinigungsmittel in die Steuerbox einbringen. Durch den Reinigungsmitteleinlass, der bezogen auf einen Strömungsweg des Dampfes zwischen dem Dampfeinlass und dem Dampfauslass angeordnet ist, kann Reinigungsmittel besonders gleichmäßig in der Steuerbox verteilt werden, wodurch eine effektive Reinigung der Steuerbox erfolgt.

Durch den Dampfeinlass und den Dampfauslass wird insbesondere Garraumatmosphäre mit einem Dampfanteil und fetthaltigem Wrasen durchgeführt.

Der mindestens eine Reinigungsmitteleinlass kann derart ausgerichtet sein, dass eine Austrittsöffnung des Reinigungsmitteleinlasses in der Steuerbox zu einer Decke der Steuerbox hin ausgerichtet ist. An der Decke der Steuerbox lassen sich Ablagerungen üblicherweise besonders schwer entfernen. Durch die Ausrichtung der Austrittsöffnung zur Decke hin wird Reinigungsmittel gezielt an die Hauptschmutzorte in der Steuerbox befördert und an der Decke zerstäubt und verteilt. Die Decke wirkt hierbei wie ein Prallblech. Das heißt, wenn das Reinigungsmittel mit einem gewissen Druck an die Decke gespritzt wird, wird eine besonders gute Verteilung des Reinigungsmittels erreicht.

Alternativ oder zusätzlich kann eine Austrittsöffnung des Reinigungsmitteleinlasses in der Steuerbox zu einer Seitenwand der Steuerbox hin gerichtet sein, wobei an der Austrittsöffnung ein Umlenkelement vorhanden ist, das ausgebildet ist, um einen aus der Austrittsöffnung austretenden Reinigungsmittelstrom zur Decke hin umzulenken. Dies ermöglicht eine flexible Positionierung des Reinigungsmitteleinlasses während gleichzeitig Reinigungsmittel gezielt an die Hauptschmutzorte in der Steuerbox befördert werden kann.

Die Umlenkung ist beispielsweise durch ein Prallblech gebildet, das im Bereich der Austrittsöffnung angeordnet ist. Insbesondere ist das Prallblech derart angeordnet, dass ein Reinigungsmittelstrahl nach dem Austritt aus der Austrittsöffnung auf das Prallblech trifft. Beim Auftreffen auf das Prallblech wird das Reinigungsmittel gleichzeitig ein Stück weit zerstäubt, was zu einer gleichmäßigen Verteilung des Reinigungsmittels beiträgt.

Gemäß einem Aspekt können mehrere Reinigungsmitteleinlässe vorgesehen sein, die an unterschiedlichen Wandungen der Steuerbox angeordnet sind. Zum Beispiel kann mindestens ein Reinigungsmitteleinlass am Boden und mindestens ein weiterer Reinigungsmitteleinlass an mindestens einer Seitenwand vorhanden sein. Auf diese Weise kann eine Verteilung des Reinigungsmittels besonders großflächig und gleichmäßig erfolgen. Die Anzahl und Anordnung der verschiedenen Reinigungsmitteleinlässe ist insbesondere auf eine Form und/oder Größe der Steuerbox abgestimmt. Beispielsweise können die Anzahl und die Position der Reinigungsmitteleinlässe derart gewählt sein, dass eine Innenwandung der Steuerbox möglichst vollständig und gleichmäßig mit Reinigungsmittel benetzt wird.

Der mindestens eine Reinigungsmitteleinlass kann durch ein Rohr gebildet sein, das sich durch einen Boden oder eine Seitenwand der Steuerbox hindurch erstreckt. Mittels eines Rohrs kann Reinigungsmittel besonders einfach zugeführt werden. Außerdem lässt sich eine Reinigungsmittelleitung einfach an einem Rohr befestigen.

Vorzugsweise weist das Rohr am Auslass eine Auffächerungsstruktur auf. Die Auffächerungsstruktur kann durch einen gebogen oder abgeflachten Abschnitt des Rohrs gebildet sein. Alternativ oder zusätzlich kann am Auslass ein Prallblech angeordnet sein. Die Auffächerungsstruktur dient dazu, das Reinigungsmittel zu zerstäuben und möglichst großflächig zu verteilen.

Das Rohr kann in seinem im Inneren der Steuerbox angeordneten Abschnitt eine Vielzahl von Verteilerbohrungen aufweisen. Die Verteilerbohrungen dienen ebenfalls dazu, Reinigungsmittel gleichmäßig und großflächig zu verteilen.

Die Verteilerbohrungen sind vorzugsweise gleichmäßig über einen Umfang des Rohrs verteilt.

Ausgehend von einer Seitenwand der Steuerbox erstreckt sich das Rohr vorzugsweise über mindestens ein Drittel einer Länge der Steuerbox, insbesondere bis zu einer Mitte der Steuerbox. Ausgehend von der Mitte lässt sich Reinigungsmittel auch bei lediglich einem Reinigungsmitteleinlass ausreichend gut verteilen.

Gemäß einem Aspekt ist ein Wasserauslass vorgesehen, durch den Abwasser aus der Steuerbox abgeführt wird. Das Abwasser kann dabei über den Dampfeinlass in die Steuerbox laufen. Der Wasserauslass kann somit sowohl zur Ableitung des in die Steuerbox gesprühten Frischwassers als auch zur Ableitung von Abwasser aus dem Garraum genutzt werden. Bei Verwendung der Steuerbox in einem Gargerät sorgt dies für eine kompakte Bauweise.

Der Wasserauslass liegt vorzugsweise unterhalb des Dampfeinlasses, insbesondere konzentrisch oder ein Stück weit versetzt zu diesem. Dadurch kann Abwasser möglichst direkt zum Auslass fließen und trägt somit nur geringfügig zu einer Verschmutzung der Steuerbox bei.

Gemäß einem Aspekt ist in der Steuerbox eine Gitterstruktur vorhanden, welche zur Abschirmung von Hochfrequenzstrahlung dient, wobei die Gitterstruktur durch ein Gussteil gebildet ist, in dem eine Vielzahl von Reinigungskanälen gebildet ist, die mit einem Reinigungsmittelanschluss verbunden sind und die an verschiedenen Stellen innerhalb der Gitterstruktur ausmünden. Auf diese Weise können auch die schwer zugänglichen Stellen innerhalb der Gitterstruktur gereinigt werden. Die Gitterstruktur dient insbesondere als Mikrowellenfalle.

In einer alternativen Ausführungsform kann die Gitterstruktur durch ein Rohrpaket aus miteinander verschweißten Vierkantrohren gebildet sein. Diese Ausführungsform hat den Vorteil, dass keine Werkzeugform erforderlich ist, sodass sich diese Ausführungsform insbesondere bei geringen Stückzahlen anbietet.

Weiter alternativ kann die Gitterstruktur durch mehrere, insbesondere abgekantete Bleche gebildet sein, die miteinander verschweißt sind.

Die Gitterstruktur hat beispielsweise Hauptkanäle, die abschnittweise einen Strömungsweg für den durch den Dampfeinlass eintretenden Dampf zum Wasserauslass bilden und die einen um das mindestens Zehnfache größeren Strömungsquerschnitt haben als die Reinigungskanäle. Der durch den Dampfeinlass einströmende Dampf kann somit auch bei Vorhandensein einer Gitterstruktur ungehindert zum Auslass strömen.

Die Aufgabe wird des Weiteren erfindungsgemäß gelöst durch ein Gargerät mit einer erfindungsgemäßen Steuerbox, wobei von einem Reinigerrohr, das insbesondere zu einem Garraum des Gargeräts führt, eine Leitung abzweigt und zum Reinigungsmitteleinlass verläuft. Eine erforderliche Leitungslänge zum Zuführen von Reinigungsmittel zum Reinigungsmitteleinlass ist dadurch möglichst gering.

Alternativ kann eine Leitung von einem Frischwasseranschluss abzweigen und zum Reinigungsmitteleinlass verlaufen, sodass Frischwasser zur Reinigung genutzt werden kann.

Weitere Vorteile und Merkmale ergeben sich aus der nachfolgenden Beschreibung und aus den beiliegenden Zeichnungen, auf die Bezug genommen wird. In den Zeichnungen zeigen:
- Figur 1 schematisch ein erfindungsgemäßes Gargerät mit einer erfindungsgemäßen Steuerbox,
- Figur 2 eine erfindungsgemäße Steuerbox gemäß einer weiteren Ausführungsform,
- Figur 3 eine Teilbaugruppe der Steuerbox aus Figur 2,
- Figur 4 eine weitere Teilbaugruppe der Steuerbox aus Figur 2,
- Figur 5 eine Steuerbox gemäß einer weiteren erfindungsgemäßen Ausführungsform, an die eine Dampfleitung angeschlossen ist,
- Figur 6 eine Detailansicht einer Gitterstruktur der in Figur 5 dargestellten Steuerbox,
- Figur 7 die Steuerbox aus den Figuren 5 und 6 in einer Ansicht von unten,
- Figur 8 schematisch eine Steuerbox gemäß einer weiteren erfindungsgemäßen Ausführungsform,
- Figur 9 schematisch noch eine erfindungsgemäße Steuerbox, und
- Figur 10 schematisch eine weitere erfindungsgemäße Steuerbox.

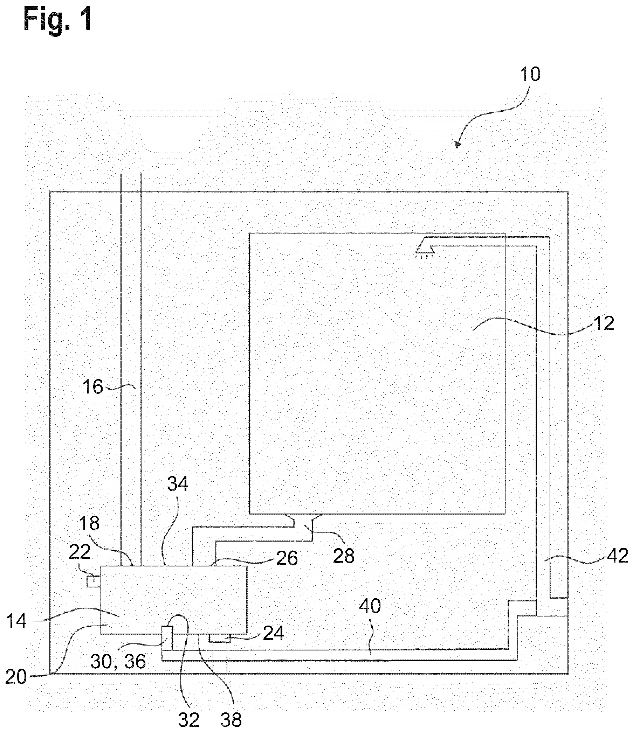

Figur 1 veranschaulicht schematisch ein Gargerät 10 mit einem Garraum 12.

Das Gargerät 10 hat eine Steuerbox 14, welche dazu dient, Dampf aus dem Garraum 12 zu kondensieren.

Zu diesem Zweck führt eine Dampfleitung 28 vom Garraum 12 zu einem Dampfeinlass 26, der in einem Gehäuse 20 der Steuerbox 14 gebildet ist.

Über einen Dampfauslass 18, der ebenfalls im Gehäuse 20 gebildet ist, insbesondere an einer Decke 34 der Steuerbox 14, kann nicht kondensierter Dampf durch ein Entlüftungsrohr 16 aus der Steuerbox 14 entweichen.

In dem Gehäuse 20 der Steuerbox 14 ist außerdem eine Wasserdüse 22 vorhanden, über die Wasser in die Steuerbox 14 gesprüht werden kann, um den Dampf zu kondensieren.

Des Weiteren ist im Gehäuse 20 der Steuerbox 14 ein Wasserauslass 24 vorhanden, über den der kondensierte Dampf und das eingesprühte Wasser abfließen können.

Der Wasserauslass 24 ist unterhalb des Dampfeinlasses 26 vorgesehen. Somit kann Abwasser, das beispielsweise durch den Dampfeinlass 26 in die Steuerbox 14 fließt, wie zum Beispiel nach einer Reinigung des Garraums 12, durch die Steuerbox 14 abfließen.

Zu Reinigungszwecken hat die Steuerbox 14 einen Reinigungsmitteleinlass 30.

Der Reinigungsmitteleinlass 30 ist bezogen auf einen Strömungsweg des Dampfes zwischen dem Dampfeinlass 26 und dem Dampfauslass 18 angeordnet.

Dabei ist der Reinigungsmitteleinlass 30 derart ausgerichtet, dass eine Austrittsöffnung 32 des Reinigungsmitteleinlasses 30 in der Steuerbox 14 zu der Decke 34 der Steuerbox 14 hin ausgerichtet ist.

Insbesondere ist der Reinigungsmitteleinlass 30 durch ein Rohr 36 gebildet, das sich durch einen Boden 38 der Steuerbox 14 hindurch erstreckt.

Zum Reinigungsmitteleinlass 30 verläuft eine Leitung 40, die von einem Reinigerrohr 42 des Gargeräts 10 abzweigt.

In einer alternativen Ausführungsform, die der Einfachheit halber nicht dargestellt ist, zweigt die Leitung 40 von einem Frischwasseranschluss ab. Das heißt, dass in diesem Fall die Reinigung mit Frischwasser erfolgt.

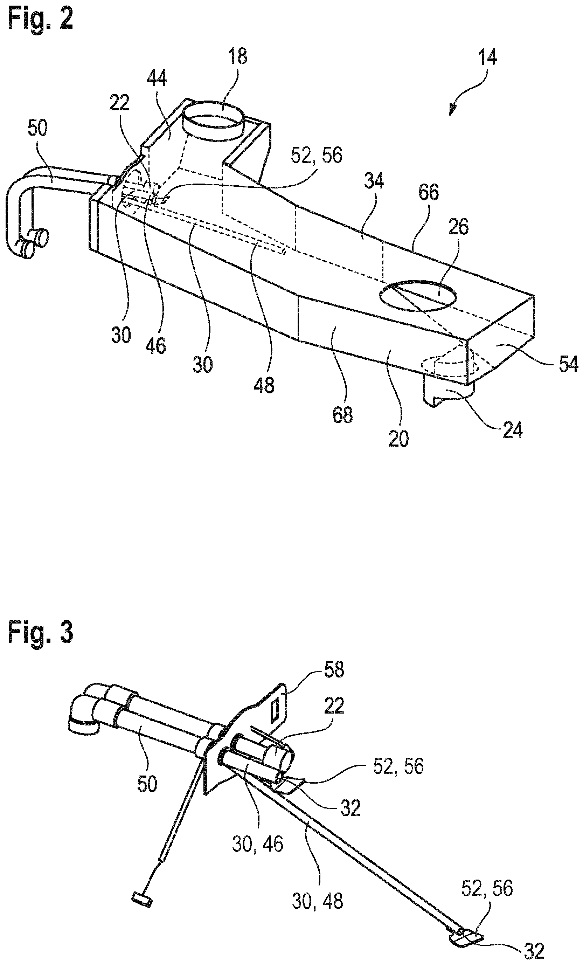

In den Figuren 2 bis 4 ist eine Steuerbox 14 gemäß einer weiteren Ausführungsform im Detail veranschaulicht.

Für Elemente, die bereits in Zusammenhang mit Figur 1 beschrieben wurden, werden im Folgenden die gleichen Bezugszeichen verwendet und es wird insoweit auf die vorangegangenen Erläuterungen verwiesen.

Bei der in den Figuren 2 bis 4 veranschaulichten Steuerbox 14 sind zwei Reinigungsmitteleinlässe 30 vorgesehen, die sich ausgehend von einer Seitenwand 44 der Steuerbox 14 in die Steuerbox 14 hinein erstrecken.

Die Reinigungsmitteleinlässe 30 sind jeweils durch ein Rohr 46, 48 gebildet.

Eines der Rohre 48 zweigt von dem weiteren Rohr 46 ab. Dadurch wird lediglich ein gemeinsames Zufuhrrohr 50 benötigt. Alternativ können die Rohre 46, 48 vollständig separat voneinander verlaufen.

Im Ausführungsbeispiel haben die Rohre 46, 48 unterschiedliche Längen, wodurch sich ein möglichst großer Bereich der Steuerbox 14 effizient reinigen lässt, da Reinigungsmittel an unterschiedliche Stellen gesprüht werden kann.

Eines der Rohre 46, 48 erstreckt sich insbesondere über mehr als ein Drittel der Länge der Steuerbox 14, insbesondere bis zu einer Mitte der Steuerbox 14.

Das Weitere Rohr 46 erstreckt sich über weniger als ein Drittel der Länge der Steuerbox 14, insbesondere über weniger als ein Fünftel der Länge der Steuerbox 14.

Am Auslass der Rohre 46, 48 ist jeweils eine Auffächerungsstruktur 52 angeordnet (siehe Figur 3).

Die Auffächerungsstruktur 52 ist beispielsweise ein Prallblech. Trifft ein aus einer Austrittsöffnung 32 der Rohre 46, 48 austretendes Reinigungsmittel mit ausreichend großer Strömungsgeschwindigkeit auf das Prallblech auf, wird es zerstäubt, was für eine gleichmäßige Verteilung des Reinigungsmittels sorgt.

Die Austrittsöffnungen 32 der Reinigungsmitteleinlässe 30 bzw. der Rohre 46, 48 sind bei der in den Figuren 2 bis 4 dargestellten Ausführungsform in der Steuerbox 14 zu einer Seitenwand 54 der Steuerbox 14 hin gerichtet.

Das Prallblech dient somit auch als Umlenkelement 56, um einen aus den Austrittsöffnungen 32 austretenden Reinigungsmittelstrom zur Decke 34 der Steuerbox 14 hin umzulenken.

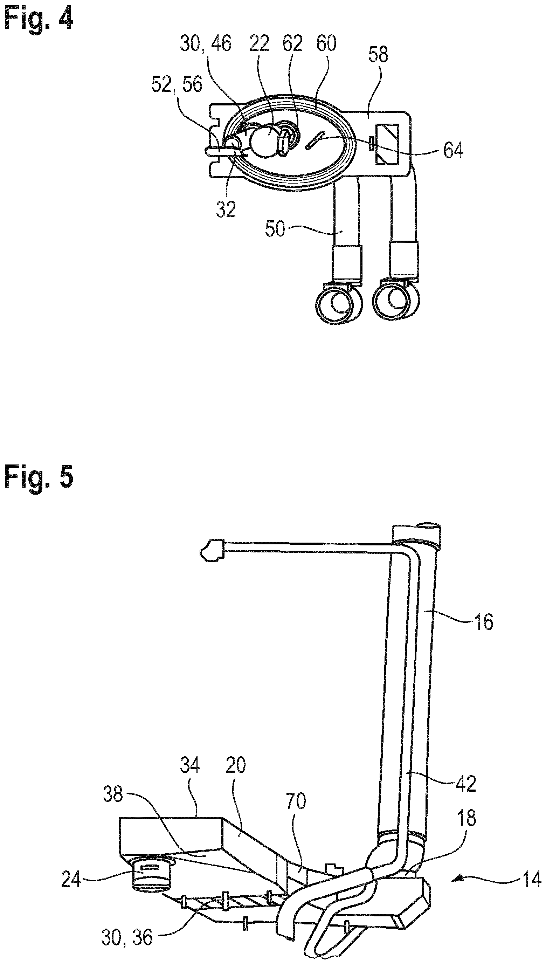

In den Figuren 3 und 4 ist eine Halterung 58 gezeigt, an der die Reinigungsmitteleinlässe 30 bzw. die Rohre 46, 48 gelagert sind, wobei in Figur 4 lediglich ein Rohr 46 dargestellt ist.

Zudem ist an der Halterung 58 die Wasserdüse 22 gelagert.

Die Halterung 58 lässt sich an der Seitenwand 44 befestigen.

Um zu vermeiden, dass an der Schnittstelle zwischen Halterung 58 und Seitenwand 44 Dampf unkontrolliert austritt, ist auf der Halterung 58 eine Dichtung 60 angeordnet (siehe Figur 4).

In Figur 4 ist eine Austrittsöffnung 62 der Wasserdüse 22 zu sehen.

Die Austrittsöffnung 62 ist auf einen Temperatursensor 64 gerichtet.

Gemäß einer alternativen Ausführungsform, die der Einfachheit halber nicht dargestellt ist, können weitere Reinigungsmitteleinlässe an einer oder mehreren der übrigen Seitenwände 54, 66, 68 angeordnet sein.

Figur 5 veranschaulicht eine Steuerbox 14 gemäß einer weiteren Ausführungsform.

Die in Figur 5 dargestellte Ausführungsform unterscheidet sich von der vorhergehenden beschriebenen Ausführungsform dadurch, dass in der Steuerbox 14 eine Gitterstruktur 70 vorhanden ist.

Die Gitterstruktur 70 bildet eine Mikrowellenfalle, welche zur Abschirmung von Hochfrequenzstrahlung dient.

Die Gitterstruktur 70 hat Hauptkanäle 72, die abschnittsweise einen Strömungsweg für den durch den Dampfeinlass 26 eintretenden Dampf zum Wasserauslass 24 bilden.

Die Gitterstruktur 70 ist durch ein Gussteil gebildet.

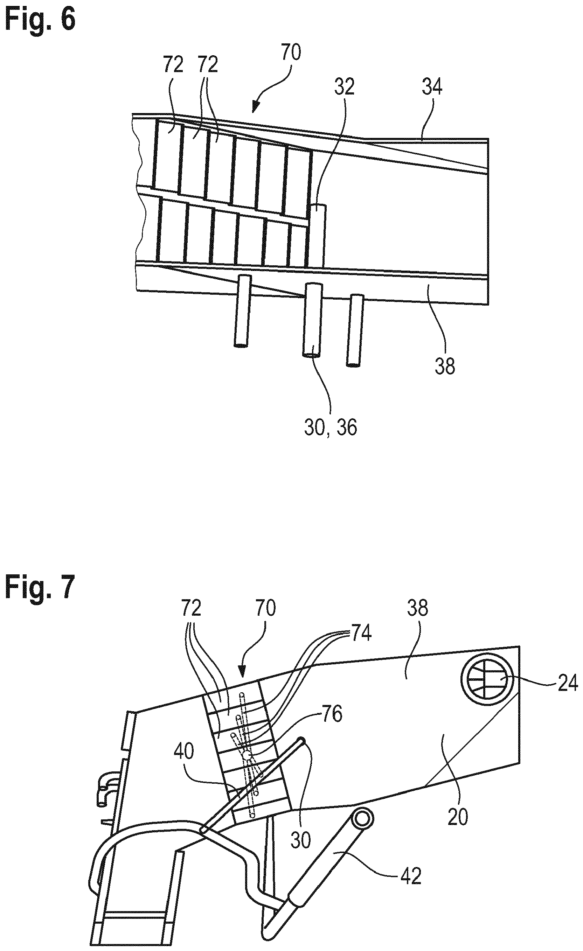

In dem Gussteil ist eine Vielzahl von Reinigungskanälen 74 gebildet, die mit einem Reinigungsmittelanschluss 76 verbunden sind und die an verschiedenen Stellen innerhalb der Gitterstruktur ausmünden. Einige der Reinigungskanäle 74 sind in Figur 7 rein schematisch veranschaulicht.

Die Steuerbox 14 gemäß den Figuren 5 bis 7 weist ebenfalls einen Reinigungsmitteleinlass 30 auf, dessen Austrittsöffnung 32 in der Steuerbox 14 zu der Decke 34 der Steuerbox 14 hin ausgerichtet ist.

Ein derartiger Reinigungsmitteleinlass 30 kann alternativ oder zusätzlich zu den Reinigungsmitteleinlässen 30 in der Steuerbox 14 gemäß den Figuren 2 bis 4 vorhanden sein.

Es ist des Weiteren denkbar, dass ein Reinigungsmitteleinlass 30 zur Gitterstruktur 70 hin gerichtet ist, sodass der Reinigungsmitteleinlass 30 zur Reinigung der Gitterstruktur 70 beiträgt. In einer weiteren Ausführungsform, die der Einfachheit halber nicht dargestellt ist, ist die Gitterstruktur 70 durch ein Rohrpaket aus miteinander verschweißten Vierkantrohren oder durch mehrere, insbesondere abgekantete Bleche gebildet, die miteinander verschweißt sind. In diesem Fall wird die Gitterstruktur 70 mittels eines Reinigungseinlasses 30 gereinigt, der so angeordnet und ausgerichtet ist, dass er Reinigungsmittel in die Hauptkanäle 72 der Gitterstruktur 70 befördern kann.

Figur 7 zeigt die Steuerbox 14 in einer Ansicht von unten. In dieser Ansicht ist die Leitung 40 zu sehen, die von dem Reinigerrohr 42 abzweigt und zum Reinigungsmitteleinlass 76 verläuft.

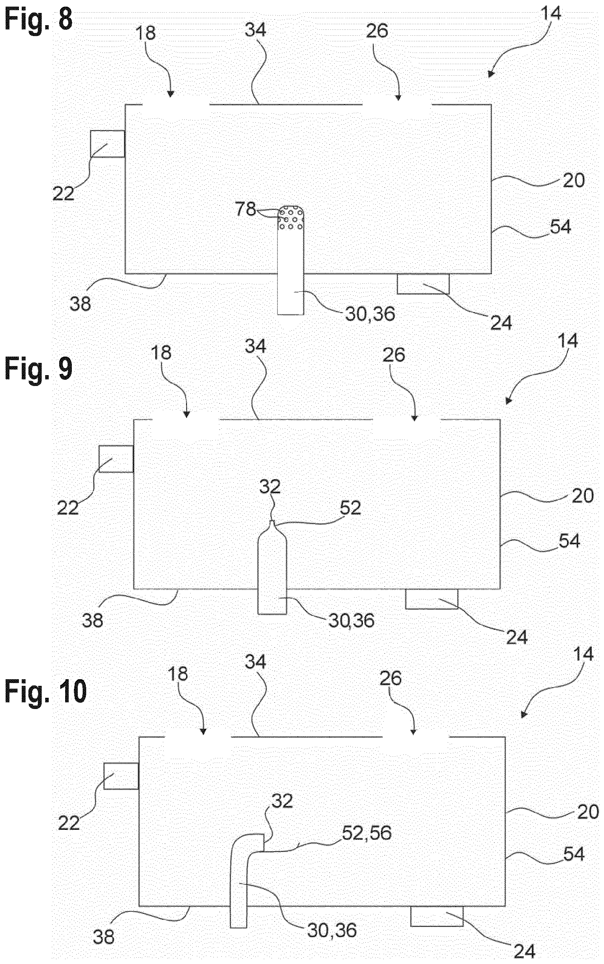

Die Figuren 8 bis 10 veranschaulichen jeweils weitere Ausführungsformen der Steuerbox 14, die sich jeweils in der Form des Reinigungsmitteleinlasses 30 unterscheiden, welcher jeweils durch ein Rohr 36 gebildet ist.

Der in Figur 8 veranschaulichte Reinigungsmitteleinlass 30 ist als Rohr 36 mit einer Vielzahl von Verteilerbohrungen 78 ausgebildet.

Figur 9 veranschaulicht einen Reinigungsmitteleinlass 30, bei dem das Rohr 36, das den Reinigungsmitteleinlass 30 bildet, abgeflacht ist. Aufgrund des durch die Abflachung reduzierten Querschnitts kann eine Strömungsgeschwindigkeit, mit der das Reinigungsmittel aus dem Rohr austritt, erhöht sein, was zu einer besseren Verteilung des Reinigungsmittels führt. Die Abflachung dient somit als Auffächerungsstruktur 52.

Gemäß der in Figur 10 dargestellten Ausführungsform ist das Rohr 36, das den Reinigungsmitteleinlass 30 bildet, gebogen. Je nach Ausrichtung der Austrittsöffnung 32 kann, wie in Figur 10 gezeigt, ein Umlenkelement 56 vorhanden sein.

Bei den in den Figuren 8 bis 10 dargestellten Ausführungsformen können alternativ oder zusätzlich Reinigungsmitteleinlässe an den Seitenwänden angeordnet sein.

Mittels der vorhergehende beschriebenen Reinigungsmitteleinlässe 30 lässt sich eine Steuerbox 14 besonders einfach reinigen.

## Patentansprüche

1. Steuerbox (14) für ein Gargerät (10), mit einem Gehäuse (20), in dem mindestens ein Dampfeinlass (26), mindestens eine Wasserdüse (22), ein Dampfauslass (18) und mindestens ein Reinigungsmitteleinlass (30) vorhanden sind, wobei der Reinigungsmitteleinlass (30) bezogen auf einen Strömungsweg des Dampfes zwischen dem Dampfeinlass (26) und dem Dampfauslass (18) angeordnet ist.

2. Steuerbox (14) nach Anspruch 1, **dadurch gekennzeichnet, dass** der mindestens eine Reinigungsmitteleinlass (30) derart ausgerichtet ist, dass eine Austrittsöffnung (32) des Reinigungsmitteleinlasses (30) in der Steuerbox (14) zu einer Decke (34) der Steuerbox (14) hin ausgerichtet ist oder dass die Austrittsöffnung (32) des Reinigungsmitteleinlasses (30) in der Steuerbox (14) zu einer Seitenwand (54) der Steuerbox (14) hin gerichtet ist, wobei an der Austrittsöffnung (32) ein Umlenkelement (56) vorhanden ist, das ausgebildet ist, um einen aus der Austrittsöffnung (32) austretenden Reinigungsmittelstrom zur Decke (34) hin umzulenken.

3. Steuerbox (14) nach einem der vorhergehenden Ansprüche, **dadurch gekennzeichnet, dass** mehrere Reinigungsmitteleinlässe (30) vorgesehen sind, die an unterschiedlichen Wandungen (44, 54, 66, 68) der Steuerbox (14) angeordnet sind.

4. Steuerbox (14) nach einem der vorhergehenden Ansprüche, **dadurch gekennzeichnet, dass** der mindestens eine Reinigungsmitteleinlass (30) durch ein Rohr (36, 46, 48) gebildet ist, das sich durch einen Boden (38) oder eine Seitenwand (44, 54, 66, 68) der Steuerbox (14) hindurch erstreckt.

5. Steuerbox (14) nach Anspruch 4, **dadurch gekennzeichnet, dass** das Rohr (36, 46, 48) am Auslass eine Auffächerungsstruktur (52) aufweist.

6. Steuerbox (14) nach Anspruch 4 oder 5, **dadurch gekennzeichnet, dass** das Rohr (36) in seinem im Inneren der Steuerbox (14) angeordneten Abschnitt eine Vielzahl von Verteilerbohrungen (78) aufweist.

7. Steuerbox (14) nach einem der Ansprüche 4 bis 6, **dadurch gekennzeichnet, dass** sich das Rohr (48) ausgehend von einer Seitenwand (44) der Steuerbox (14) über mindestens ein Drittel einer Länge der Steuerbox (14) erstreckt, insbesondere bis zu einer Mitte der Steuerbox (14).

8. Steuerbox (14) nach einem der vorhergehenden Ansprüche, **dadurch gekennzeichnet, dass** ein Wasserauslass (24) vorgesehen ist, durch den Abwasser aus der Steuerbox (14) abgeführt wird.

9. Steuerbox (14) nach einem der vorhergehenden Ansprüche, **dadurch gekennzeichnet, dass** in der Steuerbox (14) eine Gitterstruktur (70) vorhanden ist, welche zur Abschirmung von Hochfrequenzstrahlung dient, wobei die Gitterstruktur (70) durch ein Gussteil gebildet ist, in dem eine Vielzahl von Reinigungskanälen (74) gebildet ist, die mit einem Reinigungsmittelanschluss (76) verbunden sind und die an verschiedenen Stellen innerhalb der Gitterstruktur (70) ausmünden, oder wobei die Gitterstruktur (70) durch ein Rohrpaket gebildet ist.

10. Steuerbox (14) nach Anspruch 9, **dadurch gekennzeichnet, dass** die Gitterstruktur (70) Hauptkanäle (72) hat, die abschnittweise einen Strömungsweg für den durch den Dampfeinlass (18) eintretenden Dampf zum Wasserauslass (24) bilden und die einen um das mindestens Zehnfache größeren Strömungsquerschnitt haben als die Reinigungskanäle (74).

11. Gargerät mit einer Steuerbox (14) gemäß einem der vorhergehenden Ansprüche, **dadurch gekennzeichnet, dass** von einem Reinigerrohr (42) eine Leitung (40) abzweigt und zum Reinigungsmitteleinlass (30) verläuft.

12. Gargerät mit einer Steuerbox (14) gemäß einem der Ansprüche 1 bis 10, **dadurch gekennzeichnet, dass** von einem Frischwasseranschluss eine Leitung (40) abzweigt und zum Reinigungsmitteleinlass (30) verläuft.
